(19) Europäisches Patentamt
European Patent Office
Office européen des brevets

(11) Veröffentlichungsnummer: **0 003 102 B1**

(12) **EUROPÄISCHE PATENTSCHRIFT**

(45) Veröffentlichungstag der Patentschrift: **25.02.81**

(51) Int. Cl.³: **C 07 C 143/68,** C 08 G 18/77

(21) Anmeldenummer: **79100008.6**

(22) Anmeldetag: **02.01.79**

(54) **Verfahren zur Herstellung von Sulfonsäurealkylester-Gruppen aufweisenden Polyisocyanaten, sowie deren Verwendung als Ausgangsmaterial zur Herstellung von Polyadditionsprodukten.**

(30) Priorität: **12.01.78 DE 2801130**

(43) Veröffentlichungstag der Anmeldung: **25.07.79 Patentblatt 79/15**

(45) Bekanntmachung des Hinweises auf die Patenterteilung: **25.02.81 Patentblatt 81/8**

(84) Benannte Vertragsstaaten: **BE DE FR GB IT NL**

(56) Entgegenhaltungen:
**DE-A-2 227 111**
**FR-A-2 370 064**

(73) Patentinhaber: **BAYER AG, Zentralbereich Patente, Marken und Lizenzen, D-5090 Leverkusen 1, Bayerwerk (DE)**

(72) Erfinder: **Dieterich, Dieter, Dr., Ludwig Girtler Strasse 1, D-5090 Leverkusen (DE)**

**EP 0 003 102 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

Verfahren zur Herstellung von Sulfonsäurealkylester-Gruppen aufweisenden Polyisocyanaten sowie deren Verwendung als Ausgangsmaterial zur Herstellung von Polyadditionsprodukten

Sulfonsäuren aromatischer Di- bzw. Polyisocyanate sind bekannt (vgl. z. B. DE-OS 2 227 111, DE-OS 2 359 615 oder US-PS 3 826 769). Sie werden in einfacher Weise durch Umsetzung entsprechender aromatischer Di- bzw. Polyisocyanate mit Sulfonierungsmitteln wie Schwefeltrioxid, Addukten des Schwefeltrioxids, Oleum, Chlorsulfonsäure oder Schwefelsäure erhalten.

Je nach verwendetem Isocyanat und dem Grad der Sulfonierung sowie der Natur des Sulfonierungsmittels können feste, harzartige oder pulverförmige Sulfonierungsprodukte oder Lösungen bzw. Dispersionen der sulfonierten Isocyanate in unverändertem Ausgangsmaterial erhalten werden.

Die Herstellung von Polyurethanen oder Polyurethanharnstoffen auf der Basis von Polyisocyanaten mit Sulfonsäuregruppen ist z. B. in der US-PS 3 826 769 und der DE-OS 2 359 611 beschrieben. In dieser Weise durch Sulfonsäure- oder Sulfonatgruppen modifizierte Polyurethane und Polyharnstoffe weisen häufig eine beträchtliche Hydrophilie auf, weshalb der Gehalt an Sulfonsäuregruppen im allgemeinen so gering wie möglich gehalten wird. Aus diesem Grund sind teilweise sulfonierte Polyisocyanate bzw. Lösungen von Isocyanatsulfonsäuren in Polyisocyanaten von besonderer Bedeutung.

Der wesentliche Vorteil sulfonierter Polyisocyanate liegt in der hohen Polarität der Sulfonsäuregruppen begründet. Dadurch ergeben sich ausgeprägte Wechselwirkungen bzw. Haftkräfte gegenüber polaren Medien und Substraten, wie Wasser, feuchten und polaren Oberflächen, insbesondere solchen anorganischer Art.

Andererseits weisen chemisch einheitliche oder persulfonierte Isocyanatosulfonsäuren hohe Schmelzpunkte, schlechte Löslichkeit in organischen Medien und eine außerordentliche Empfindlichkeit gegenüber Wasser und Luftfeuchtigkeit auf. Dies erschwert die Verarbeitbarkeit dieser Produkte. Darüber hinaus stört häufig der stark saure Charakter. Verfärbung und vorzeitiger Abbau daraus hergestellter Polyurethane erschweren den praktischen Einsatz der Produkte. Zwar lassen sich diese Erscheinungen durch geeignete Neutralisationsmaßnahmen vermeiden, doch wird die Hydrophilie der Produkte dadurch erhöht.

Es besteht daher der Wunsch nach Polyisocyanaten, welche einerseits polaren Charakter und die damit verbundenen Vorteile, wie geringen Dampfdruck, bessere Hafteigenschaften besitzen, die jedoch andererseits überwiegend hydrophoben Charakter aufweisen.

Weiterhin besteht der Wunsch, leicht zugängliche aromatische Polyisocyanate zur Verfügung zu haben, welche beim hydrolytischen Abbau der daraus aufgebauten Oligomeren und Polymeren toxikologisch unbedenkliche Produkte liefern.

Eine Lösung dieser Probleme ist Inhalt der vorliegenden Erfindung. Überraschenderweise wurde nämlich gefunden, daß bei der Umsetzung aromatischer Polyisocyanato-Sulfonsäuren mit Lactonen unter Molekulargewichtserhöhung neuartige aromatische Polyisocyanate erhalten werden, welche durch die Anwesenheit von Sulfonsäureester-Gruppen charakterisiert sind.

Die neuen erfindungsgemäßen Polyisocyanate besitzen gegenüber bisher bekannten Polyisocyanaten eine Reihe von vorteilhaften Eigenschaften:

1. Sie besitzen stark polaren Charakter, außerordentlich niedrigen Dampfdruck und sind hervorragend verträglich mit einer Vielzahl polarer und apolarer Medien und Reaktionspartner.
2. In Abhängigkeit von chemischer Natur und Menge des verwendeten Lactons läßt sich die Hydrophile der Produkte in weiten Grenzen steuern. Bei vollständiger Umsetzung der Sulfonsäure-Gruppen mit Lactonen erhält man hydrophobe Polyisocyanate.
3. Der hydrolytische Abbau der Produkte führt zu toxikologisch unbedenklichen Polyaminosulfonsäuren.
4. Durch die Umsetzung kann die Funktionalität der erfindungsgemäßen Polyisocyanate erhöht werden; insbesondere lassen sich erfindungsgemäß aus bifunktionellen Isocyanaten höherfunktionelle Polyisocyanate mit geringem Dampfdruck herstellen.
5. Die Verwendung der erfindungsgemäßen Polyisocyanate beispielsweise bei der Herstellung von Polyurethanen führt zu Polymeren mit verbessertem Brandverhalten.

Überraschenderweise reagieren Lactone mit Isocyanato-Sulfonsäuren zumindest anteilweise wie bifunktionelle Verbindungen. Es wird angenommen, daß zunächst in einer raschen Reaktion durch die Sulfonsäuregruppe der Lactonring geöffnet wird, wobei eine Carboxy-Gruppe entsteht, die ihrerseits in einer langsameren Reaktion mit einer Isocyanatgruppe reagiert. Auf diese Weise wird also nicht nur eine Modifizierung der Sulfonsäuregruppe zu einer hydrophoben Sulfonsäureestergruppe erreicht, sondern diese Reaktion führt gleichzeitig zu einem Kettenaufbau bzw. einer Kettenverknüpfung durch eine Arylsulfonsäureamidalkylester-Gruppe.

Gegenstand der vorliegenden Erfindung ist somit ein Verfahren zur Herstellung von modifizierten, Sulfonsäurealkylester-Gruppen aufweisenden Polyisocyanaten, deren Isocyanatgruppen zumindest teilweise in dimerisierter Form vorliegen können, dadurch gekennzeichnet, daß man mindestens zwei Isocyanatgruppen aufweisende Isocyanatoarylsulfonsäuren, deren Isocyanatgruppen zumindest teilweise in dimerisierter Form vorliegen können, gegebenenfalls im Gemisch mit sulfonsäuregruppenfreien Mono- und/oder Polyisocyanaten bei 0–190°C mit Lactonen umsetzt, wobei man Art und Mengenverhältnisse der Reaktionspartner so wählt, daß das Äquivalentverhältnis der Gesamtmenge der Isocyanatgruppen einschließlich der gegebenenfalls in dimerisierter Form vorliegenden Isocyanatgruppen zu Sulfonsäuregruppen >1 ist und das Äquivalentverhältnis von eingesetztem Lacton zu Sulfonsäuregruppen zwischen 0,1 und 10 liegt.

Gegenstand der vorliegenden Erfindung ist schließlich auch die Verwendung der nach dem erfindungsgemäßen Verfahren zugänglichen modifizierten Polyisocyanate als Ausgangsmaterialien zur Herstellung von oligomeren oder polymeren Polyadditionsprodukten.

Bei der Durchführung des erfindungsgemäßen Verfahrens erfolgt in einem ersten Reaktionsschritt zunächst eine Addition des Lactons an die Sulfonsäuregruppe der aromatischen Isocyanatosulfonsäure unter Ausbildung von Isocyanatoarylsulfonsäure-Carboxyalkyl-estern. So reagiert beispielsweise Diisocyanatobenzolsulfonsäure (I) mit ε-Caprolacton (II) in der ersten Reaktionsstufe des erfindungsgemäßen Verfahrens zum entsprechenden Diisocyanatobenzolsulfonsäurecarboxyalkyl-ester (III):

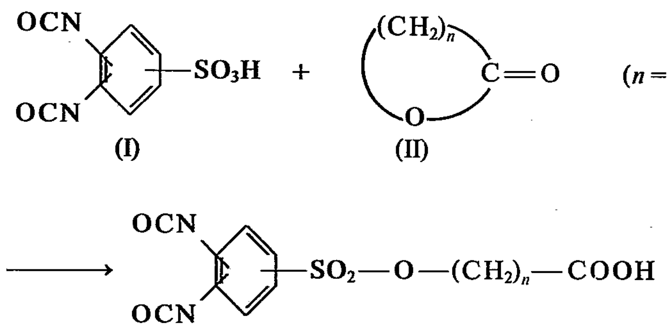

(I) (II) ($n = 5$)

(III)

Bei Verwendung unterschüssiger Mengen von Lactonen entstehen in der ersten Reaktionsstufe des erfindungsgemäßen Verfahrens Gemische, welche auch nicht umgesetzte Isocyanatoarylsulfonsäure enthalten.

Falls nun die in der ersten Reaktionsstufe gebildete Carboxylgruppe nicht durch beispielsweise sterische Hinderung an einer Weiterreaktion gehindert ist, entstehen bei der Durchführung des erfindungsgemäßen Verfahrens in einer zweiten Reaktionsstufe (überschüssiges) Isocyanatgruppen, Sulfonsäurealkylester-Gruppen und Amidgruppen aufweisende Verbindungen. So kann beispielsweise obiges Zwischenprodukt (III) mit sich selbst unter Kettenverlängerungsreaktion zu höhermolekularen Verbindungen der Formel (IV) weiter reagieren:

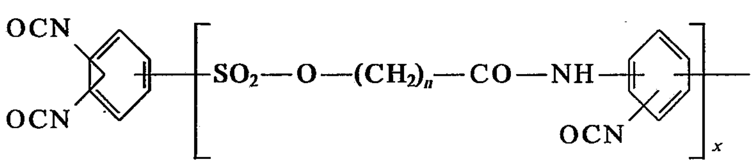

$x = 0-20$ (IV)

wobei im Reaktionsgemisch vorliegende carboxylgruppenfreie Isocyanate (entweder bislang an der Umsetzung nicht beteiligte Isocyanatoarylsulfonsäuren oder ggf. im Reaktionsgemisch ebenfalls vorliegende sulfonsäuregruppenfreie Mono- oder Polyisocyanate) einen Kettenabbruch unter Ausbildung von Endgruppen der Formel (V)

$$-SO_2-O-(CH_2)_n-CO-NH-R \quad (V)$$

bewirken, wobei R für den Rest steht, wie er durch Entfernung einer Isocyanatgruppe aus einem hydroxylgruppenfreien Mono- oder Polyisocyanat entsteht.

Wie leicht ersichtlich, richtet sich die Größe des Index x nach Art und Mengenverhältnis der eingesetzten Ausgangsmaterialien. So entstehen während der zweiten Stufe des erfindungsgemäßen Verfahrens bei Verwendung von Polyisocyanatoarylsulfonsäureestern als ausschließliche Isocyanat-Komponente zusammen mit äquivalenten oder überschüssigen Mengen an Lactonen vergleichsweise höhermolekulare Verbindungen, während bei Verwendung unterschüssiger Mengen an Lactonen und/oder bei Mitverwendung von sulfonsäuregruppenfreien Mono- oder Polyisocyanaten vergleichsweise niedermolekulare Verbindungen, in denen x auch gleich 0 sein kann, gebildet werden.

In Abhängigkeit der Reaktivität der eingesetzten Ausgangsisocyanate und in Abhängigkeit von den Reaktionsbedingungen, insbesondere von der Reaktionstemperatur, können beim erfindungsgemäßen Verfahren in einer eventuellen dritten Reaktionsstufe durch Addition von Isocyanatgruppen an die Amidgruppen auch Acylharnstoffgruppen aufweisende Derivate entstehen. Aus dem bisher Gesagten ist leicht ersichtlich, daß bei der Durchführung des

erfindungsgemäßen Verfahrens die Molekülgröße und der Verzweigungsgrad und damit die Viskosität und die NCO-Funktionalität der erfindungsgemäßen Verfahrensprodukte auf einfache Weise durch geeignete Auswahl der Ausgangssubstanzen, deren Mengenverhältnisse und der Reaktionsbedingungen eingestellt werden kann. Diese Feststellung rechtfertigt sich insbesondere auch im Hinblick auf den Umstand, daß anstelle der oben beispielhaft genannten Ausgangsmaterialien alle beliebigen, nachstehend beispielhaft erwähnten Ausgangsmaterialien, d. h. insbesondere Isocyanatoarylsulfonsäuren, Lactone und sulfonsäuregruppenfreie Mono- oder Polyisocyanate eingesetzt werden können.

Beim erfindungsgemäßen Verfahren entstehen somit vorzugsweise modifizierte Polyisocyanate, die neben Isocyanatgruppen und Sulfonsäurealkylestergruppen gegebenenfalls noch freie Sulfonsäuregruppen sowie gegebenenfalls Amid- und/oder Acylharnstoffgruppen aufweisen. Da die als Ausgangsmaterialien eingesetzten Isocyanatoarylsulfonsäuregruppen oft in zumindest teilweise dimerisierter Form (Uretdione) vorliegen, handelt es sich auch bei den erfindungsgemäßen modifizierten Polyisocyanaten um solche, deren Isocyanatgruppen gegebenenfalls zumindest teilweise dimerisiert sind.

Die bevorzugten, nach dem erfindungsgemäßen Verfahren zugänglichen, modifizierten Polyisocyanate sind gekennzeichnet durch

a) einen Gehalt an, gegebenenfalls in dimerisierter Form vorliegenden, Isocyanatgruppen von 4 bis 48, vorzugsweise 10 bis 40 Gew.-%.
b) einen Gehalt an, Bestandteil einer Arylsulfonsäurealkylester-Gruppe bildenden, $-SO_2-O$-Gruppen von 0,3 bis 38 Gew.-%, vorzugsweise 0,6 – 28 Gew.-%,
c) einen Gehalt an Sulfonsäuregruppen $-SO_3H$ von 0 bis 36, vorzugsweise 0 bis 10 Gew.-%,
d) einen Gehalt an Amidgruppen $-NH-CO-$ von 0 bis vorzugsweise 0,2 bis 20 Gew.-% und
e) einen Gehalt an Acylharnstoffgruppen

$$-NH-CO-\underset{|}{N}-CO$$

von 0 bis 28 vorzugsweise 0,2 bis 20 Gew.-%,

wobei die Gesamtmenge der unter d) und e) genannten Gruppen mindestens 0,4 Gew.-% und höchstens 28 Gew.-% und wobei die Gesamtmenge der unter b) und c) genannten Gruppen zusammen höchstens 38 Gew.-% beträgt.

Beim erfindungsgemäßen Verfahren können als Isocyanatoarylsulfonsäuren die Sulfonierungsprodukte aller bekannten aromatischen Polyisocyanate eingesetzt werden. Beispiele für derartige in Form ihrer Sulfonierungsprodukte beim erfindungsgemäßen Verfahren einsetzbare aromatische Polyisocyanate sind:

Phosgenierungsprodukte von Kondensaten von Anilin und Aldehyden oder Ketonen, wie z. B. Acetaldehyd, Propionaldehyd, Butyraldehyd, Aceton, Methyläthylketon.

Ferner geeignet sind die Phosgenierungsprodukte von Kondensaten von am Kern Alkyl substituierten Anilinen, insbesondere Toluidinen mit Aldehyden oder Ketonen, wie z. B. Formaldehyd, Acetaldehyd, Butyraldehyd, Aceton, Methyläthylketon.

Weiterhin geeignet sind Umsetzungsprodukte der genannten aromatischen Polyisocyanatgemische mit 0,2 – 50 Mol-% an Polyolen, vorausgesetzt, daß die Viskosität der so erhaltenen Umsetzungsprodukte 50 000 mPa · s bei 25°C nicht überschreitet und der NCO-Gehalt der Umsetzungsprodukte mindestens 6 Gew.-% beträgt. Geeignete Polyole zur Modifizierung der Ausgangsmaterialien sind insbesondere die in der Polyurethan-Chemie bekannten Polyäther- und/oder Polyesterpolyole des Molekulargewichtsbereichs 200 bis 6000, vorzugsweise 300 bis 4000, sowie niedermolekulare Polyole des Molekulargewichtsbereichs 62 bis 200. Beispiele derartiger niedermolekularer Polyole sind Äthylenglykol, Propylenglykol, Glycerin, Trimethylolpropan, 1,4,6-Hexantriol.

Besonders bevorzugte Isocyanatoaryl-sulfonsäuren sind die Sulfonierungsprodukte von 2,4-Toluylendiisocyanat sowie Gemischen aus 2,4- und 2,6-Toluylendiisocyanat, ferner Sulfonierungsprodukte der Di- bzw. Polyisocyanate, welche durch Phosgenierung von Anilin/Formaldehyd-Kondensaten erhalten werden. Diese Gemische enthalten insbesondere 4,4'-Diisocyanatodiphenylmethan und 2,4'-Diisocyanatodiphenylmethan sowie höherkernige Homologe dieser Produkte. Es ist grundsätzlich ohne Belang, mit welchen Sulfonierungsmitteln die Isocyanato-arylsulfonsäuren hergestellt worden sind. Geeignete Sulfonierungsmittel sind beispielsweise Schwefeltrioxid, Oleum, Schwefelsäure, Komplexe des Schwefeltrioxids mit Lewis-Basen, welche Sauerstoff-, Stickstoff- oder Phosphoratome enthalten. Es können jedoch auch andere bekannte Sulfonierungsmittel wie Chlorsulfonsäure und Acylsulfate, beispielsweise Acetylsulfat bzw. Umsetzungsprodukte von Säure-Anhydriden mit Schwefelsäure oder Oleum eingesetzt werden. Insbesondere zur Herstellung von nur partiell sulfonierten Isocyanaten spielen Nebenreaktionen, z. B. Harnstoff bzw. Biuretbildung oder die teilweise Umwandlung von Isocyanatgruppen in Carbamidsäurechlorid-Gruppen oder Acylamid-Gruppen im allgemeinen keine Rolle, so daß in diesen Fällen ohne weiteres beispielsweise Schwefelsäure, Chlorsulfonsäure oder Acetylsulfat eingesetzt werden können. Zur Herstellung von hochsulfonierten Polyisocyanaten wird dagegen Schwefeltrioxid bzw. seine Komplexe, beispielsweise gemäß DE-OS 25 10 693, vorzugsweise eingesetzt. Hieraus folgt, daß insbesondere auch aromatische Polyisocyanatarylsulfonsäuren auf

der Basis Toluylendiisocyanat bzw. Diphenylmethandiisocyanat bevorzugt werden, welche Harnstoff- bzw. Biuretgruppen enthalten.

Besonders bevorzugt sind Lösungen und Dispersionen von Isocyanat-aryl-sulfonsäuren in nichtsulfonierten flüssigen Polyisocyanaten. Solche Produkte werden beispielsweise bei teilweiser Sulfonierung aromatischer Polyisocyanate erhalten. Im allgemeinen erhält man bei der Teilsulfonierung von chemisch einheitlichen Diisocyanaten oder von binären Isomerengemischen Suspensionen, während bei der Teilsulfonierung von Mehrkomponenten-Gemischen homogene Lösungen entstehen. Für das erfindungsgemäße Verfahren ist es grundsätzlich ohne Belang, ob Lösungen oder Suspensionen eingesetzt werden. Ganz besonders bevorzugt sind teilsulfonierte Polyisocyanatgemische, wie sie durch Phosgenierung von Anilin-Formaldehyd-Kondensaten erhalten werden und in den deutschen Offenlegungsschriften 2 227 111, 2 359 614 und 2 359 615 beschrieben sind. Ebenfalls besonders bevorzugt sind Suspensionen von Diisocyanato-toluol-sulfonsäure-Dimeren sowie Diisocyanatodiphenylmethan-sulfonsäure-Dimeren in Diisocyanatotoluol bzw. Diisocyanatodiphenylmethan.

Die Herstellung der beim erfindungsgemäßen Verfahren einzusetzenden Isocyanatoarylsulfonsäuren bzw. ihrer Gemische mit nicht sulfonierten aromatischen Polyisocyanaten erfolgt nach den bekannten Verfahren des Standes der Technik bzw. in Analogie zu den bekannten Verfahren des Standes der Technik, wie er sich beispielsweise aus den bereits genannten Veröffentlichungen, oder aus US-PS 3 826 769 ergibt. Die Verfahren der deutschen Patentanmeldungen P 25 24 476.2 oder P 26 15 876.9 sind zur Herstellung von beim erfindungsgemäßen Verfahren einsetzbaren Isocyanatoarylsulfonsäuren ebenfalls geeignet.

Es ist auch möglich, beim erfindungsgemäßen Verfahren Lösungen bzw. Suspensionen der beispielhaft genannten Isocyanatoarylsulfonsäuren in aliphatischen Polyisocyanaten wie z. B. Tetramethylendiisocyanat oder Hexamethylendiisocyanat und/oder in cycloaliphatischen bzw. gemischt aliphatisch-cycloaliphatischen Polyisocyanaten wie z. B. 4,4'-Diisocyanatodicyclohexylmethan, 2,4- bzw. 2,6-Diisocyanato-hexahydrotoluol oder 1-Isocyanato-3,3,5-trimethyl-5-isocyanatomethylcyclohexan einzusetzen. Falls eine Erniedrigung der NCO-Funktionalität der erfindungsgemäßen Verfahrensprodukte erwünscht ist können auch Lösungen bzw. Suspensionen der Isocyanato-arylsulfonsäuren in aromatischen, aliphatischen oder cycloaliphatischen Monoisocyanaten zum Einsatz gelangen. Beispiele für die letztgenannten Verbindungen sind Phenylisocyanat, Tosylisocyanat, n-Hexylisocyanat, 6-Chlor-hexylisocyanat, Cyclohexylisocyanat oder Methoxymethylisocyanat. Grundsätzlich denkbar ist auch der Einsatz von sulfonierten aromatischen Monoisocyanaten, wie z. B. Phenylisocyanat als Isocyanatoarylsulfonsäure in Kombination mit nicht sulfonierten Polyisocyanaten der beispielhaft genannten Art. Die Art und Mengenverhältnisse der beim erfindungsgemäßen Verfahren einzusetzenden Isocyanate sowie der Sulfonierungsgrad werden so gewählt, daß das Äquivalentverhältnis von gegebenenfalls teilweise in dimerisierter Form vorliegenden Isocyanatgruppen und Sulfonssäuregruppen $>1:1$, d. h. insbesondere zwischen $1{,}05:1$ und $50:1$, vorzugsweise zwischen $2:1$ und $30:1$, liegt.

Beim erfindungsgemäßen Verfahren können als Lactone beliebige, mindestens einen 6–9gliedrigen Lactonring aufweisende, daneben gegebenenfalls noch mit Isocyanat- oder Hydroxylgruppen substituierte, ansonsten jedoch unter den Reaktionsbedingungen unter denen die Lacton/Sulfonsäure-Addition erfolgt, weitgehend inerte organische Verbindungen eingesetzt werden.

Geeignete Lactone sind solche mit 6–9 Ringgliedern der allgemeinen Formel

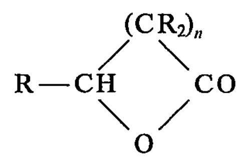

wobei n für eine Zahl von 3–6 steht und die Reste R gleich oder verschieden sein können, wobei R ein Wasserstoffatom oder einen Alkyl-, Cycloalkyl-, Alkoxy- oder Arylrest bedeutet. Ferner soll die Gesamtzahl der Kohlenstoffatome der Substituenten 12 nicht übersteigen und mindestens n+2 der Reste R Wasserstoffatome darstellen.

Als Ausgangsstoffe des erfindungsgemäßen Verfahrens werden unsubstituiertes ε-Caprolacton oder substituierte ε-Caprolactone bevorzugt, beispielsweise verschiedene Monoalkyl-ε-caprolactone, z. B. die Monomethyl-, Monoäthyl-, Monopropyl-, Monoisopropyl-ε-caprolactone bis zu den Monododecyl-ε-caprolactonen, Dialkyl-ε-caprolactone, in denen die beiden Alkylgruppen am gleichen oder verschiedenen Kohlenstoffatomen, nicht aber beide am ε-Kohlenstoffatom substituiert sind, vorausgesetzt, daß das ε-Kohlenstoffatom nicht disubstituiert ist. Alkoxy-ε-caprolactone, wie Methoxy-, und Äthoxy-ε-caprolactone und Cycloalkyl-, Aryl-ε-caprolactone, wie Cyclohexyl- und Phenyl-ε-aprolactone und Lactone mit mehr als 6 Kohlenstoffatomen im Ring, z. B. ζ-Öhnantholacton und η-Caprylolacton.

Ebenfalls brauchbar sind δ-Lactone, wie δ-Valerolacton und seine Substitutionsprodukte. γ-Butyrolacton ist weniger bevorzugt, da es weniger leicht reagiert.

Die beim erfindungsgemäßen Verfahren zum Einsatz gelangenden Lactone bzw. deren Mengen werden so gewählt, daß das Äquivalentverhältnis der Lacton-Gruppen zu Sulfonsäuregruppen zwischen $0{,}1:1$ und $10:1$, vorzugsweise zwischen $0{,}6:1$ und $2:1$, liegt. Bei einem Äquivalentverhältnis von $<1:1$ werden die

vorhandenen $SO_3H$-Gruppen nur teilweise verestert, so daß die erfindungsgemäßen Verfahrensprodukte noch freie Sulfonsäuregruppen aufweisen, so daß die durch diese Sulfonsäuregruppen bewirkte Hydrophilie der erfindungsgemäßen Verfahrensprodukte durch das genannte Äquivalentverhältnis innerhalb des Bereichs von 0,1 : 1 bis 1 : 1 variiert werden kann. Selbstverständlich kann die Lacton-Komponente auch im Überschuß eingesetzt werden, um beispielsweise eine quantitative Veresterung der Sulfonsäuregruppen zu gewährleisten, oder um bei Verwendung von mehr als eine Lacton-Gruppe aufweisenden Verbindungen, freie Lacton-Gruppen in die erfindungsgemäßen Verfahrensprodukte einzubauen. Ein gegebenenfalls eingesetzter Überschuß an Lacton kann gewünschtenfalls nach Beendigung des erfindungsgemäßen Verfahrens destillativ aus dem erfindungsgemäßen Verfahrensprodukt entfernt werden.

Die Durchführung des erfindungsgemäßen Verfahrens ist denkbar einfach und erfolgt im allgemeinen im Temperaturbereich von 0–190°C, vorzugsweise 20–140°C.

Bei diskontinuierlicher Arbeitsweise wird das Polyisocyanat vorzugsweise bei Raumtemperatur in einem Rührgefäß vorgelegt und das Lacton eingerührt. Die Reaktion setzt im allgemeinen sofort unter Selbsterwärmung ein. Wenn der Anteil an Sulfonsäure-Gruppen im Polyisocyanat mehr als ca. 10% beträgt, kann es zweckmäßig sein, die Reaktion bei tieferen Temperaturen, z. B. zwischen 0 und 20°C, durchzuführen und gegebenenfalls unter Kühlung zu arbeiten. Eine solche Maßnahme ist jedoch im Regelfall nicht erforderlich, da eine Erwärmung des Reaktionsgemisches auf beispielsweise 140°C oder auch darüber nicht von Nachteil ist. Wenn auf eine rasche Reaktion innerhalb kurzer Zeit Wert gelegt wird sowie im Falle der Verwendung von viskosen Isocyanaten, kann es zweckmäßig sein, die Reaktion bei erhöhter Temperatur vorzunehmen, beispielsweise zwischen 40–140°C, in Sonderfällen kann die Temperatur bis ungefähr 190°C betragen.

Die Reaktion wird vorzugsweise lösungsmittelfrei durchgeführt, jedoch kann selbstverständlich auch in Anwesenheit inerter Lösungsmittel, wie z. B. Dichloräthan, Chloroform, Tetrachloräthan, Trichlorfluormethan, Aceton, Toluol, Chlorbenzol gearbeitet werden.

Die Umsetzung fester Polyisocyanatsulfonsäuren mit Lactonen ist unproblematisch, da während der Reaktion die festen Sulfonsäuren rasch in Lösung gehen. Die Verfahrensprodukte sind daher im Regelfall homogene Flüssigkeiten oder hochviskose bis feste Harze. Im Falle nur partieller Umsetzung mit dem Lacton können auch Dispersionen erhalten werden, welche noch feste Isocyanatosulfonsäuren enthalten.

Nach einer besonders bevorzugten Arbeitsweise werden Lösungen der Isocyanatosulfonsäuren in organischen Phosphaten für die Umsetzung mit Lactonen eingesetzt.

Anstelle von Phosphaten können auch organische Phosphite, Phosphonate und Pyrophosphate eingesetzt werden. Vorzugsweise wird bereits die Sulfonierung in Gegenwart der Phosphate durchgeführt und unmittelbar anschließend die erfindungsgemäße Umsetzung vorgenommen. Kommen saure organische Phosphate zum Einsatz oder sind im Anschluß an die Sulfonierung Umesterungsreaktionen zwischen Isocyanatosulfonsäure und Phosphat eingetreten, so kann auch die OH-Gruppe des Phosphats mit dem Lacton reagieren, was bei der Berechnung der Mengenverhältnisse zu berücksichtigen ist.

Geeignete Phosphate, Phosphite, Phosphonate oder Pyrophosphate sind beispielsweise in der DE-OS 2 510 693 genannt. Besonders bevorzugt ist Tris-(2-chloräthyl)-phosphat.

Es ist besonders vorteilhaft, die Umsetzung von Isocyanatoarylsulfonsäuren mit Lactonen unmittelbar im Anschluß an die Sulfonierungsreaktion durchzuführen. Diese Verfahrensweise hat den besonderen Vorteil, daß sich eine Isolierung der äußerst feuchtigkeitsempfindlichen freien Isocyanatoarylsulfonsäuren erübrigt. So besteht eine besonders bevorzugte Verfahrensweise darin, das Polyisocyanat, z. B. Toluylendiisocyanat oder Diisocyanatodiphenylmethan in einem Lösungsmittel, wie Chlorbenzol, zu sulfonieren und die dabei gebildete Suspension mit einem Lacton umzusetzen. Da üblicherweise auch die Phosgenierungsreaktion zur Herstellung des Polyisocyanats in einem inerten Lösungsmittel wie Chlorbenzol vorgenommen wird, können Phosgenierung, Sulfonierung und Veresterung unmittelbar hintereinander vorgenommen werden, ohne daß eine der Zwischenstufen isoliert zu werden braucht. Man erhält so, vom entsprechenden Diamin ausgehend direkt die erfindungsgemäßen Verfahrensprodukte als Lösung bzw. Dispersion in dem verwendeten Lösungsmittel.

Falls nur weniger als ca. 50% des Polyisocyanats sulfoniert und verestert werden soll kann man auch in Abwesenheit von organischen Lösungsmitteln arbeiten. Die Sulfonierung führt dann zu einer Suspension des sulfonierten Polyisocyanats in unverändertem Ausgangsisocyanat. Während der Umsetzung mit dem Lacton geht im allgemeinen die suspendierte feste Phase in Lösung und man erhält eine Lösung des Sulfonsäureesters in Ausgangsisocyanat. Bedingt durch das hohe Verhältnis der NCO-Gruppe zu den $SO_3H$-Gruppen ist in diesem Fall das Molekulargewicht der Isocyanato-arylsulfonsäureester niedriger als bei vollständiger Sulfonierung des Polyisocyanats.

Beispielsweise lassen sich nach der lösungsmittelfreien Methode viskose Lösungen von mit Sulfonsäureester-Gruppen modifiziertem Toluylendiisocyanat herstellen. Diese Lösungen können als solche anstelle von nichtmodifiziertem Toluylendiisocyanat eingesetzt werden, man kann aber auch das freie Toluylendiisocyanat abdestillieren und das harzartige Sulfonsäureester-isocyanat isolieren. Dieses kann als solches, beispielsweise in Pulverlacken oder aber

gelöst in Lösungsmitteln oder in beliebigen, auch aliphatischen Polyisocyanaten gelöst, Verwendung finden.

Bei Einsatz roher Phosgenierungsprodukte von Anilin-Formaldehyd-Kondensaten als Polyisocyanat empfiehlt sich die lösungsmittelfreie Methode nur, wenn weniger als ca. 30% und insbesondere 5–20% des Polyisocyanats sulfoniert und mit Lacton umgesetzt werden, da sowohl die Sulfonierung als auch die Veresterung, an die sich im Regelfall eine Urethanisierung anschließt, von erheblicher Viskositätserhöhung begleitet werden.

Soll ein höherer Sulfonierungsgrad erreicht werden, so empfiehlt es sich auch hier die Mitverwendung eines inerten Lösungsmittels oder die Durchführung der Sulfonierung unmittelbar im Anschluß an die Phosgenierung vor Abdestillieren des zur Phosgenierung verwendeten Lösungsmittels.

Bei der Umsetzung der Isocyanatoarylsulfonsäuren mit Lactonen ist zu beachten, daß der erste Reaktionsschritt, die Ringöffnung des Heterocyclus unter Verwendung sehr rasch erfolgt. Der zweite Reaktionsschritt, die Reaktion der dabei gebildeten COOH-Gruppe mit vorhandenen Isocyanat-Gruppen verläuft demgegenüber wesentlich langsamer. Dies hat zur Folge, daß der Viskositätsanstieg nur langsam erfolgt, und zur Beschleunigung des zweiten Reaktionsschritts höhere Temperatur und/oder Katalysatoren wie z. B. metallorganische Verbindungen wie Zinndioctoat oder Dibutylzinndilaurat verwendet werden können.

Wie bereits eingangs ausgeführt, entstehen beim erfindungsgemäßen Verfahren im allgemeinen freie Isocyanatgruppen und Amidgruppen aufweisende modifizierte Polyisocyanate, die zu den entsprechenden, Acylharnstoff-Gruppen aufweisenden Kompositionen weiter reagieren können.

Eine Acylharnstoffbildung kann zur Erhöhung der NCO-Funktionalität durchaus erwünscht sein. In einem solchen Falle empfiehlt sich der Einsatz von die Acylharnstoffbildung aus Amidgruppen und Isocyanatgruppen beschleunigenden Katalysatoren der beispielsweise in DE-OS 2 040 645 bzw. US-PS 3 769 318 beschriebenen Art, bzw. die Anwendung von höheren Temperaturen, z. B. über 80°.

Die erfindungsgemäßen Verfahrensprodukte sind wertvolle Ausgangsmaterialien zur Herstellung von Polyurethankunststoffen nach dem Isocyanat-Polyadditionsverfahren. Sie eignen sich z. B. zur Herstellung von kompakten oder zelligen Elastomeren, Weichschäumen, Halbhartschäumen und Hartschäumen, insbesondere dann, wenn hohe Anforderungen an die Vernetzungsdichte, das Brandverhalten oder die Abbaubarkeit gestellt werden. So eignen sich die erfindungsgemäßen Polyisocyanate beispielsweise zur Herstellung von Polstermaterialien, Matratzen, elastischen Unterlagen, Autositzen, Dämpfungsmaterialien, Stoßabsorbern, Konstruktionswerkstoffen, schalldämmenden Isolierungen, feuchtigkeitsaufnehmenden Materialien, z. B. im Hygienesektor, zur Herstellung von Substraten zur Pflanzenaufzucht sowie für den Wärme- und Kälteschutz. Ganz besonders geeignet sind die erfindungsgemäßen Polyisocyanate zur Herstellung anorganisch-organischer Kunststoffe, beispielsweise in Analogie zu den in DBP 2 310 559, DE-OS 2 227 147, 2 359 608 beschriebenen Verfahrensweise sowie für Oberflächenbeschichtungen, Imprägnierungen und Verklebungen. Durch Dispergieren der erfindungsgemäßen Polyisocyanate in Wasser, gegebenenfalls in Gegenwart von Basen, lassen sich wäßrige Emulsionen herstellen.

## Beispiel 1

174 g (1 Mol) 2,4-Diisocyanatotoluol werden vorgelegt und 23 g gasförmiges Schwefeltrioxyd bei 23–30°C aufgeleitet, wobei das Schwefeltrioxyd vom Diisocyanat absorbiert wird. Das Schwefeltrioxyd wird aus erwärmtem 65%igem Oleum durch einen Stickstoffstrom entwickelt. In die erhaltene Suspension werden anschließend bei 40–45°C innerhalb von 15 Minuten 28,5 g (0,25 Mol) Epsiloncaprolacton eingetragen. Es wird zunächst 2 Stunden auf 100°C, anschließend 4 1/2 Stunden auf 110–115°C erhitzt, wobei eine feste, klare Lösung entsteht. Durch Gaschromatographie einer Probe wird festgestellt, daß der Gehalt an Caprolacton sehr stark abgefallen ist. Nach weiterem 5stündigem Erhitzen auf 120–125°C ist das Produkt praktisch frei von Caprolacton. Es wird eine viskose klare Lösung des Sulfonsäureesters in überschüssigem Diisocyanatotoluol erhalten. Auch nach mehreren Monaten hat sich kein fester Niederschlag gebildet. Schwefelgehalt: 4,0%, NCO-Gehalt 32,0%, Säuregehalt: 60 Milliäquivalente/100 g. Der Säuregehalt beinhaltet $-COOH$ und $-SO_3H$-Gruppen sowie den Anteil an Sulfonsäureestergruppen, der während der Bestimmung des Säuregehalts verseift wird. Unter der Annahme, daß keine Reaktion des Lactons mit der Isocyanatosulfonsäure erfolgt, wären folgende Werte zu erwarten:

NCO-Gehalt: 37,2%; Säuregehalt: 239 Milliäquivalente/100 g. Aus dem Vergleich dieser beiden Werte mit den tatsächlich gefundenen ergibt sich ein Gehalt an Amid- und Acylharnstoff-Gruppen von insgesamt ca. 5 Gew.-%.

## Beispiel 2

Es wird gemäß Beispiel 1 verfahren, jedoch unter Verwendung von 25 g $\gamma$-Butyrolacton anstelle des Caprolactons. Die Mischung wird 12 Stunden bei 100–120°C gerührt und ist dann klar und homogen. Nach 10 Monaten hat sich kein Niederschlag abgeschieden, die viskose Masse fließt jedoch sehr ungleichmäßig. Nach Erwärmung auf 60°C tritt völlige Homogenisierung ein, die Lösung fließt völlig gleichmäßig. NCO-Gehalt: 31,8%; Schwefelgehalt: 4,05 Gew.-%; Säuregehalt: 92 Milliäquivalente/100 g.

Beispiel 3

Es wird gemäß Beispiel 2 verfahren, jedoch unter Verwendung von nur 4,3 g (0,05 Mol) γ-Butyrolacton. Nach 15 Stunden Rühren bei 100–135°C ist eine klare, viskose Lösung entstanden, während eine Vergleichsprobe, welche kein Butyrolacton enthielt, unter diesen Bedingungen nach wie vor ungelöste Isocyanatosulfonsäure enthielt.

Beispiel 4

Es wird wie in Beispiel 1 verfahren, jedoch unter Verwendung von 17 g Schwefeltrioxyd und 29,2 g Cumarin. Nach der Zugabe des Cumarins wird 6 Stunden bei 140°C gerührt, währenddessen eine klare Lösung entsteht.

Beispiel 5

Vom rohen Phosgenierungsprodukt eines Anilin/Formaldehyd-Kondensats wird so viel 2-Kernanteil abdestilliert, daß der Destillationsrückstand bei 25°C eine Viskosität von 400 mPa · s aufweist. Das erhaltene Produkt wird unter Rühren durch Überleiten eines Schwefeltrioxyd/Stickstoff-Gemisches auf einen Schwefelgehalt von 0,96% sulfoniert. Nach ca. 8 Monaten beträgt die Viskosität 5000 mPa · s bei 25°C. NCO-Gehalt 29,2%, Säure-Gehalt 31,5 Milliäquivalente pro 100 g.

560 g (ca. 2 Mol) dieses sulfonierten Polyisocyanats werden bei Raumtemperatur mit 11,4 g (0,1 Mol) Epsilon-Caprolacton verrührt, dabei fällt die Viskosität auf 3800 mPa · s ab. Nach 3 Wochen Stehen bei Raumtemperatur ist sie auf 4200 angestiegen. NCO-Gehalt: 28,4%.

Beispiel 6

Es wird wie in Beispiel 5 verfahren, jedoch unter Verwendung von 22,8 g (0,2 Mol) Epsilon-caprolacton. Viskosität nach 3 Wochen: 3300 mPa · s NCO-Gehalt: 28,4%, Säure-Wert: 30,1 Milliäquivalente pro 100 g.

Beispiel 7

Das Reaktionsprodukt aus Beispiel 6 wird 2 Stunden auf 100°C erhitzt. Bei der Analyse werden folgende Werte erhalten: Viskosität: 3700 mPa · s, NCO-Gehalt: 27,7%, Säure-Wert: 28,3 Milliäquivalente pro 100 g. Viskosität nach 3 Wochen: 4200 mPa · s.

Beispiel 8

2000 g eines Gemisches aus 60% 2.4-Diisocyanatodiphenylmethan und 40% 4.4'-Diisocyanatodiphenylmethan wurden bei Raumtemperatur mit einem Schwefeltrioxyd/Stickstoffstrom begast bis ca. 73 g Schwefeltrioxyd aufgenommen worden waren. Das Produkt hatte eine Viskosität von 120 mPa · s, einen Schwefelgehalt von 1,25% und einen NCO-Gehalt von 30,1%, Säure-Gehalt: 32,2 ml n-HCl/100 g.

500 g dieses sulfonierten Polyisocyanats werden mit 22,3 g Epsiloncaprolacton bei Raumtemperatur gemischt. Dabei fällt die Viskosität von 80 mPa · s ab. Analysendaten nach 3 Wochen: Viskosität: 90 mPa · s, NCO-Gehalt: 28,6%, Säure-Wert: 28,5 Milliäquivalente pro 100 g.

**Patentansprüche**

1. Verfahren zur Herstellung von modifizierten, Sulfonsäurealkylester-Gruppen aufweisenden Polyisocyanaten, deren Isocyanatgruppen zumindest teilweise in dimerisierter Form vorliegen können, dadurch gekennzeichnet, daß man mindestens zwei Isocyanatgruppen aufweisende Isocyanatoarylsulfonsäuren, deren Isocyanatgruppen zumindest teilweise in dimerisierter Form vorliegen können, gegebenenfalls im Gemisch mit sulfonsäuregruppenfreien Mono- und/oder Polyisocyanaten bei 0–190°C mit 6–9gliedrigen Lactonen umsetzt, wobei man Art und Mengenverhältnisse der Reaktionspartner so wählt, daß das Äquivalentverhältnis der Gesamtmenge der Isocyanatgruppen einschließlich der gegebenenfalls in dimerisierter Form vorliegenden Isocyanatgruppen zu Sulfonsäuregruppen >1 ist und das Äquivalentverhältnis von Lacton-Gruppen zu Sulfonsäuregruppen zwischen 0,1 und 10 liegt.

2. Verfahren gemäß Anspruch 1, dadurch gekennzeichnet, daß man sulfonsäuregruppenfreie aromatische Polyisocyanate in einem ersten Reaktionsschritt in an sich bekannter Weise sulfoniert und das bei dieser Sulfonierung anfallende zumindest teilweise aus Isocyanatoarylsulfonsäuren bestehende Polyisocyanatgemisch ohne weitere Aufarbeitung mit Lactonen umsetzt.

3. Verwendung der gemäß Anspruch 1 und 2 zugänglichen modifizierten Polyisocyanate als Ausgangsmaterial zur Herstellung von oligomeren oder polymeren Polyadditionsprodukten.

**Claims**

1. Process for the preparation of modified polyisocyanates which contain sulphonic acid alkyl ester groups and in which the isocyanate groups may be at least partly in the dimerised form, characterised in that isocyanatoaryl sulphonic acids which have at least two isocyanate groups and in which the isocyanate groups may be at least partly in the dimerised form, optionally as mixtures with mono and/or polyisocyanates which are free from sulphonic acid groups, are reacted with 6 to 9-membered lactones at 0 to 190°C, the nature and proportions of the reactants being chosen so that the equivalent ratio of the total quantity of isocyanate groups including any isocyanate groups present in the dimerised form to sulphonic acid groups is greater than 1 and the equivalent ratio of lactone groups to sulphonic acid groups is between 0.1 and 10.

2. Process according to claim 1, characterised

in that aromatic polyisocyanates which are free from sulphonic acid groups are sulphonated in known manner in a first reaction step and the polyisocyanate mixture obtained from this sulphonation, which mixture consists at least partly of isocyanatoaryl sulphonic acids, is reacted with lactones without first being worked up.

3. Use of the modified polyisocyanates obtainable according to claims 1 and 2 as starting material for the production of oligomeric or polymeric polyaddition products.

**Revendications**

1. Procédé de préparation de polyisocyanates modifiés comportant des groupes d'esters alkyliques d'acides sulfoniques, polyisocyanates dont les groupes isocyanates peuvent être au moins partiellement présents sous forme dimérisée, caractérisé en ce qu'on fait réagir des acides isocyanatoaryl-sulfoniques comportant au moins deux groupes isocyanates et dont les groupes isocyanates peuvent se présenter au moins partiellement sous forme dimérisée, éventuellement en mélange avex des monoisocyanates et/ou des polyisocyanates exempts de groupes d'acides sulfoniques, à une température de 0 à 190°C, avec des lactones hexagonales à nonagonales, la nature et les rapports quantitatifs des partenaires réactionnels étant choisis de telle sorte que le rapport équivalent entre la quantité totale des groupes isocyanates, y compris les groupes isocyanates éventuellement présents sous forme dimérisée, et les groupes d'acides sulfoniques soit supérieur à 1 et que le rapport équivalent entre les groupes lactones et les groupes d'acides sulfoniques soit compris entre 0,1 et 10.

2. Procédé suivant la revendication 1, caractérisé en ce que, au cours d'une première étape réactionnelle, on sulfone, de façon connue en soi, des polyisocyanates aromatiques exempts de groupes d'acides sulfoniques puis, sans traitement complémentaire, on fait réagir, avec des lactones, le mélange de polyisocyanates obtenu lors de cette sulfonation et constitué au moins partiellement d'acides isocyanato-arylsulfoniques.

3. Utilisation des polyisocyanates modifiés obtenus par le procédé suivant les revendications 1 et 2 comme matière de départ pour la préparation de produits de polyaddition oligomères ou polymères.